(19) **Europäisches Patentamt**

**European Patent Office**

**Office européen des brevets**

(11) Veröffentlichungsnummer: **0 289 810 B1**

# EUROPÄISCHE PATENTSCHRIFT

(12)

(45) Veröffentlichungstag der Patentschrift:
31.07.91 Patentblatt 91/31

(21) Anmeldenummer: 88105701.2

(22) Anmeldetag: 11.04.88

(51) Int. Cl.$^5$: **B01D 53/34**

(54) **Verfahren zur Rückhaltung von Quecksilber aus Rauchgasen einer Verbrennungsanlage.**

(30) Priorität: 06.05.87 DE 3715046

(43) Veröffentlichungstag der Anmeldung:
09.11.88 Patentblatt 88/45

(45) Bekanntmachung des Hinweises auf die
Patenterteilung:
31.07.91 Patentblatt 91/31

(84) Benannte Vertragsstaaten:
AT BE CH FR GB LI NL SE

(56) Entgegenhaltungen:
DE-C- 326 485
US-A- 4 273 747

(73) Patentinhaber:
KERNFORSCHUNGSZENTRUM KARLSRUHE
GMBH
Weberstrasse 5 Postfach 3640
W-7500 Karlsruhe 1 (DE)

(72) Erfinder: Vogg, Hubert, Prof. Dr.
De-Coster-Strasse 2
W-7500 Karlsruhe (DE)
Erfinder: Braun, Hartmut, Dr.
Heinrich-Heine-Ring 5
W-7500 Karlsruhe (DE)
Erfinder: Metzger, Michael
Haupstrasse 35a
W-7940 Altheim-Waldhausen (DE)
Erfinder: Merz, Albert, Dr.
Breslauer Strasse 56
W-7500 Karlsruhe (DE)

## Beschreibung

Die Erfindung betrifft ein Verfahren zur Rückhaltung von Quecksilber aus Rauchgasen einer Verbrennungsanlage, bei der zur Emissionsverminderung von Schadgasen Kalk und Sorptionsmittel in den Rauchgasstrom eingebracht werden.

Bei der Verbrennung quecksilberhaltiger Brennstoffe wird Quecksilber aufgrund seiner hohen Flüchtigkeit in das Abgas transportiert. Bei für die Entstaubung üblichen Temperaturen von ca. 200°C liegt die Hauptmenge Quecksilber immer noch gasförmig vor, so daß es ohne weitere Rauchgasreinigung emittiert wird. Für den Brennstoff Hausmüll oder Sonderabfall stellt dies ein besonderes Problem dar, da die Emissionen mehr als 200 µg Quecksilber/m³ betragen und diese aus Umweltschutzgründen heute nicht mehr akzeptiert werden können.

Neben der Abscheidung anderer Schadstoffe wurden bisher in der Abfallverbrennung deshalb für Quecksilber folgende chemische Rauchgasreinigungsverfahren installiert :

1. Variante A düst vor dem Entstauber Kalk in das Rauchgas ein, um vor allem HCl und $SO_2$ zu binden. Das Reaktionsprodukt wird gemeinsam mit Flugstaub am Filter aus dem Prozeß ausgeschleust. Dabei soll wunschgemäß auch Quecksilber abgereichert werden.

2. Variante B sieht nach dem Entstauber eine Naßwäsche vor, die HCl und Quecksilber im sauren Teil des Wäschers, $SO_2$ im neutral-alkalischen Teil des Wäschers absorbieren soll.

3. Variante C kombiniert Variante A + B zu einem abwasserlosen Rauchgasreinigungsverfahren, indem das Waschwasser (Variante B) durch Rückführung vor den Entstauber in einem Sprühreaktor (Variante A) verdampft und das Salzprodukt mit dem Flugstaub gemeinsam am Filter ausgetragen wird.

Alle drei genannten Varianten erreichen die von vielen Behörden heute geforderten Restemissionen von max. 100 µg Quecksilber/m³ nicht. Eigene Messungen belegen, daß die zulässigen Emissionswerte um ein Mehrfaches überschritten werden. Die Mechanismen und Ursachen sind in Müll + Abfall 86, Heft 2 bzw. Heft 3 veröffentlicht worden.

Es ist bekannt, daß sich die Quecksilber-Emissionsraten durch Einbringen von Aktivkohle in das Rauchgas von Verbrennungsanlagen wirksam reduzieren lassen.

Die Verwendung von Aktivkohle zur Quecksilber-Rückhaltung in großen Müllverbrennungsanlagen ist jedoch unwirtschaftlich, weil die Betriebskosten einer solchen Anlage durch die Verwendung von teurer und in großen Mengen benötigter Kohle stark ansteigen würden.

Ein Betreiber einer Müllverbrennungsanlage wird statt dessen die Rauchgastemperatur beim Rauchgasreinigungsprozeß absenken unter 140°C und dabei die Gefahr einer Taupunktunterschreitung und die Bildung von Verkrustungen in Kauf nehmen, da es bekannt ist, daß Quecksilber bzw. Quecksilberverbindungen gasförmig emittiert werden und daß die Flüchtigkeit dieser Schadstoffe unter dem Einfluß von Flugasche und einer geringeren Rauchgastemperatur vermindert wird (s. Müll + Abfall 86, Heft 2, 3)

Der Erfindung liegt die Aufgabe zugrunde, die Quecksilberkonzentration im Rauchgas von Verbrennungsanlagen, in denen vor dem Entstauber Kalk in das Rauchgas eingedüst wird, zumindest auf den behördlich geforderten Wert, insbesondere auf max. 100 µg Quecksilber/m³, zu reduzieren.

In Anbetracht der großen Menge an Chemikalien, die dem Rauchgas zur Emissionsverminderung von Schadstoffen zugesetzt werden müssen, kommen zur Rückhaltung von Quecksilber nur solche Kohlenstoffhaltige Feststoffe in Betracht, die billig und in ausreichender Menge zur Verfügung stehen, um einen wirtschaftlichen Betrieb einer Verbrennungsanlage zu ermöglichen.

Erfindungsgemäß wird die Aufgabe dadurch gelöst, daß dem Reaktionsmittel (Kalk) Grünkoks zugemischt wird. Das dabei bei der Rauchgasreinigung entstehende Quecksilber-Grünkoks-Adsorbat wird mit dem Kalk-Reaktionsprodukt und der Flugasche am Entstauber abgeschieden und endgelagert.

Grünkoks ist ein Abfallprodukt von Erdölraffinerien, das in großen Mengen anfällt und nur schwer absetzbar ist. Grünkoks steht deshalb billig und in großen Mengen zur Verfügung.

Untersuchungen haben gezeigt, daß durch die Zugabe von 20% Grünkoks, bezogen auf den Flugascheanteil, die Rauchgasreinigungstemperatur bei gleicher Quecksilberrückhaltung um 30°C erhöht werden kann.

Ohne die Quecksilberrückhaltung zu verschlechtern, kann durch Vergrößern des Grünkoksanteils auf Werte über 20%, bezogen auf den Flug ascheanteil, die Rauchgasreinigungstemperatur weiter erhöht werden, bis schließlich bei genügender (d.h. 100%iger) Grünkokszumischung das Quecksilber selbst bei Temperaturen von 200° noch vollständig abgeschieden wird.

Eine Temperaturreduzierung in der Rauchgasreinigung, die zu Taupunktunterschreitungen und zur Bildung von Verkrustungen führen kann, ist damit unnötig.

Im folgenden wird die Erfindung anhand einer Beschreibung einiger Durchführungsbeispiele näher erläu-

EP 0 289 810 B1

tert :

Beispiel 1 :

Durch ein mit Grünkoks gefülltes Adsorberröhrchen wurde an einer Müllverbrennungsanlage (MVA) bei verschiedenen Sorptionstemperaturen ein mit Quecksilber beladener Rauchgasstrom geleitet. Die eingesetzte Grünkoksmenge betrug 4 g/m³ Rauchgas.

| $T/°C$ | $C_{Hg}$ v.Adsorber $(mg/Nm^3)$ | $C_{Hg}$ n.Adsorber $(mg/Nm^3)$ | Abscheidegrad $(\%)$ |
|---|---|---|---|
| 200 | 303 | 0 | 100 |
| 170 | 530 | 0 | 100 |
| 150 | 324 | 0 | 100 |
| 140 | 315 | 0 | 100 |

Beispiel 2 :

Durch ein mit Grünkoks (20%)/Flugasche-Gemisch gefülltes Adsorberröhrchen wurde an einer MVA bei verschiedenen Sorptionstemperaturen ein mit Quecksilber beladener Rauchgasstrom geleitet. Das eingesetzte Grünkoks (20%)/Flugasche-Gemisch betrug 6 g/m³ Rauchgas.

| $T/°C$ | $C_{Hg}$ v.Adsorber $(mg/Nm^3)$ | $C_{Hg}$ n.Adsorber $(mg/Nm^3)$ | Abscheidegrad $(\%)$ |
|---|---|---|---|
| 200 | 296 | 127 | 57 |
| 170 | 474 | 83 | 82 |
| 150 | 476 | 12 | 97 |
| 140 | 283 | 0 | 100 |

Beispiel 3 :

Durch ein mit Flugasche gefülltes Adsorberröhrchen wurde an einer MVA bei verschiedenen Sorptionstemperaturen ein mit Quecksilber beladener Rauchgasstrom geleitet. Die eingesetzte Flugaschemenge betrug 4 g/m³ Rauchgas.

| $T/°C$ | $C_{Hg}$ v.adsorber $(mg/Nm^3)$ | $C_{Hg}$ n.Adsorber $(mg/Nm^3)$ | Abscheidegrad $(\%)$ |
|---|---|---|---|
| 210 | 190 | 150 | 21 |
| 170 | 1280 | 830 | 35 |
| 140 | 600 | 90 | 85 |
| 110 | 270 | 30 | 89 |

3

## Patentansprüche

1. Verfahren zur Rückhaltung von Quecksilber aus Rauchgasen einer Verbrennungsanlage, bei der zur Emissionsminderung von Schadgasen Kalk und Sorptionsmittel in den Rauchgasstrom eingebracht werden, dadurch gekennzeichnet, daß als Sorptionsmittel Grünkoks oder ein Grünkoks/Flugasche-Gemisch verwendet wird.

2. Verfahren nach Anspruch 1, dadurch gekennzeichnet, daß der Grünkoksanteil im Grünkoks/Flugasche-Gemisch mindestens 20% beträgt.

3. Verfahren nach Anspruch 1, dadurch gekennzeichnet, daß Kalk und Sorptionsmittel gleichzeitig in den Rauchgasstrom eingebracht werden.

## Claims

1. Process for the retention of mercury from flue gases of a combustion plant, wherein, to reduce the emission of polluting gases, lime and a sorption agent are introduced into the stream of flue gases, characterised in that green coke or a mixture of green coke and flue ash is used as the sorption agent.

2. Process according to claim 1, characterised in that the green coke content in the mixture of green coke and flue ash is at least 20%.

3. Process according to claim 1, characterised in that lime and the sorption agent are simultaneously introduced into the stream of flue gases.

## Revendications

1. Procédé pour la rétention de mercure à partir de gaz de fumée d'une installation de combustion, dans lequel on introduit de la chaux et un adsorbeur dans le courant de gaz de fumée pour réduire l'émission de gaz toxiques, caractérisé en ce que l'on utilise en tant qu'adsorbant du coke maigre ou un mélange de coke maigre et de cendres volantes.

2. Procédé selon la revendication 1, caractérisé en ce que la fraction de coke maigre dans le mélange de coke maigre/cendres volantes est au moins de 20%.

3. Procédé selon la revendication 1, caractérisé en ce que le chaux et un adsorbant sont introduits simultanément dans le courant des gaz de fumée.